# EUROPEAN PATENT APPLICATION

(11) **EP 0 602 819 A1**
(43) Date of publication of application: **22.06.1994**
(21) Application number: 93309530.9
(22) Date of filing: 30.11.1993
(51) Int. Cl.: B29C 41/10, C22F 1/04

(54) **Method of coating an aluminium workpiece with resin during heat treatment**

(30) Priority: 30.11.1992 JP 320731/92
(71) Applicant: JIDOSHA BUHIN KOGYO CO.LTD., Ebina-shi, Kanagawa (JP); Nippon Light Metal Co., Ltd., Minato-ku Tokyo-to, 108 (JP)
(72) Inventor: Kawata, Yutaka, c/o Jidosha Buhin Kogyo Co., Ltd., Ebina-shi, Kanagawa (JP); Ebe, Yoichi, c/o Nippon Light Metal Co., Ltd., Tokyo (JP); Hino, Harumichi, c/o Nikkei Techno-Research, Ihara-gun, Shizuoka (JP); Kawai, Hidenobu, c/o Nikkei Techno-Research, Ihara-gun, Shizuoka (JP)
(74) Representative: Senior, Janet

(57) **Abstract**

The method of coating resin to an aluminium workpiece during the course of its heat treatment including a T4 treatment followed by a T6 treatment, comprises the steps of : T4-treating the aluminium workpiece ; machining the T4- treated workpiece into the shape of a product ; heating the machined workpiece for the T6 treatment, and, concurrently therewith, coating the workpiece with the resin by feeding a resin powder onto the surface of the workpiece under the T6 treatment, thereby dually using the heating for the T6 treatment also as the heating for the resin coating ; and finishing by trimming off the extra thickness of the resin coating. Since the heating for the T6 treatment serves also for the heating for resin coating, the reheating of the workpiece for resin coating is dispensed with, thereby preventing the strength from degrading on reheating and developing the effects of the T6 treatment fully.

## Description

This invention relates to a method of coating resin on a workpiece of aluminium during the course of its heat treatment to develop high strength.

In the automotive industry, where weight reduction of a car body is intensively pursued to improve the fuel consumption rate and other aspects of a car's performance, aluminium and its alloys (to be referred to as "AI" hereinafter) are already being used in various car parts. Since AI is inherently mechanically weaker than steel, however, heat treatment to raise its strength is required for replacing steel parts with AI parts. One automotive part that can achieve an especially significant weight saving is the propeller shaft, i.e., the shaft that transmits the engine power to the driving wheels.

A propeller shaft has to absorb away the changes in its length that inevitably occur while the automobile is running. For this need, the innerspline structure is usually adopted: the whole shaft is made up of two parts: a cylindrical body whose inner wall is milled to a number of negative splines and a positive spline shaft to be inserted into the former so as to be able to slide freely.

To make such a spline structure bear up to sliding wear, the current practice is to surface harden a steel- made spline shaft by high frequency heating and quenching, but because a spline shaft made of ordinary AI cannot be hardened that way, it wears down fast at the contact surface.

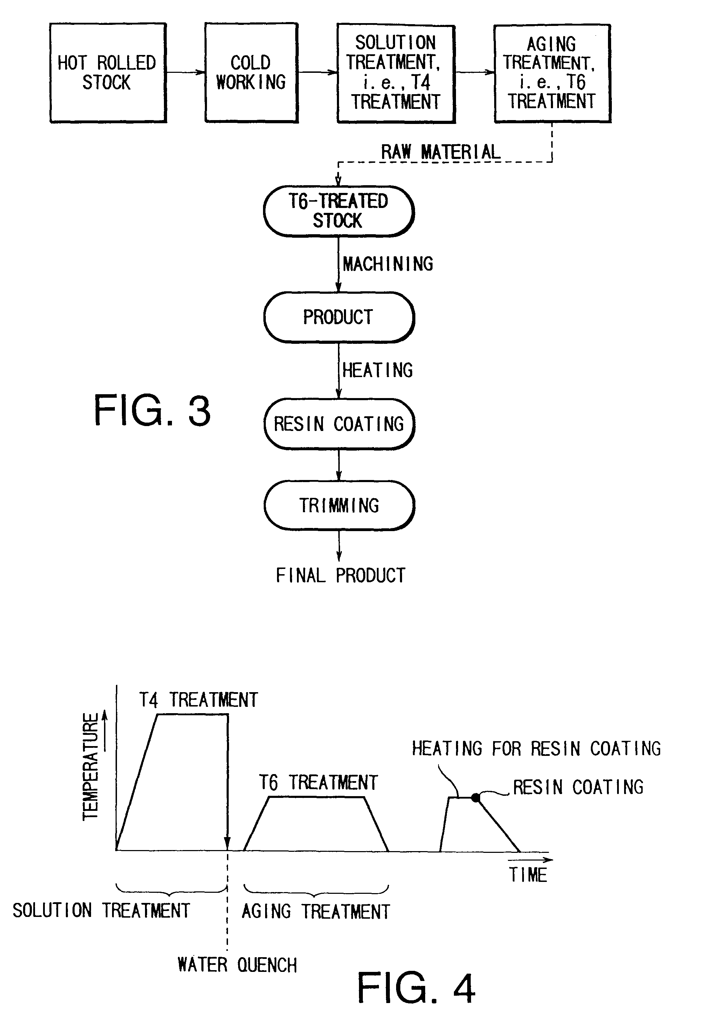

To overcome this difficulty, the applicants of the present application proposed a method of coating the sliding surfaces of the AI-made spline shaft with resin to improve the wear resistance (Japanese Patent Application No. 4-320729 filed November 30,1992, entitled "Aluminium Propeller Shaft"; not yet published). This proposal is schematically shown in Figures 3 and 4 of the accompanying drawings. As seen in these drawings, a starting material is a hot rolled AI stock, and it is cold worked into a rod stock, then heat treated to solution treatment, i.e., the T4 treatment, which comprises heating the metal to a temperature above its solution temperature (usually 515 to 550°C) and quenching (for example by water cooling) therefrom so as to bring about a state of supersaturation in the solute atoms and vacancies at room temperature. Subsequently, the T4-treated stock is aged at an appropriate temperature (for example in the range of from 120 to 200°C) for an appropriate period of time so as to let certain alloy components or phases precipitate out of the supersaturation; this is the T6 treatment. This gives rise to the desired strength.

The spline shaft is machined in the usual manner out of this heat treated (i.e., T4 followed by T6) rod, then the workpiece is coated with resin by heating it to for example about 300°C, the coating endowing the shaft with an excellent lubrication and wear resistance. Finally, the extra resin coating is trimmed off to finish the whole process.

There is one fault with this method, however: the heating to near 300°C, which is the recrystallisation temperature for AI, for the step of resin coating, actually anneals the stock, so that much of the strength acquired in the T6 treatment is lost.

According to the invention there is provided a process in which the heating for the T6 treatment serves also as the heating for the resin coating.

Accordingly, the present inventin provides a method of coating resin on a heat treatable aluminium or aluminium alloy substrate during a heat treatment which comprises solution treating, quenching and artificially ageing the substrate, wherein, during the ageing of the substrate, the resin is fed to at least one surface thereof.

The substrate may be a formed product, for example a propeller shaft, especially a propeller shaft for the automobile industry, and especially one having a spline structure. Such products may, for example, be made substantially of aluminium or aluminium alloy.

Advantageously, the product is formed after the solution treatment and before the artificial ageing.

Advantageously, the resin coating is applied as a powder.

Thus, the invention also provides a method of coating resin on a workpiece comprising heat treatable aluminium or aluminium alloy material, the method comprising the steps of: solution heat treating and quenching the material; machining the solution heat treated material; heating the machined workpiece and applying a resin coating to the workpiece by feeding a resin powder to at least one surface of the heated workpiece, such that the heating for the ageing treatment also melts the resin powder; and trimming any excess resin coating from the workpiece.

A purpose of this invention lies in providing a method of coating resin on a workpiece made of AI during the course of its heat treatment so as to avoid or minimise loss of its strength. To achieve this end, we have several embodiments that we prefer.
(1) The first embodiment is characterised in that the heating of an AI workpiece for a T6 treatment (i.e., an ageing treatment) serves dually as the heating for a resin coating also; this may be achieved by feeding the resin in powdery form to at least one surface of the T4-treated (i.e., heated to above the solution temperature, then quenched) workpiece as it is being heated for the T6 treatment.
   The advantage of this embodiment lies in the fact that, as the heating for the T6 treatment serves also for the heating for resin coating, the reheating of the workpiece for resin coating is dispensed with, thereby avoiding degradation of the strength or loss of the effects of the T6 treatment which may occur during reheating.
(2) The second embodiment comprises the steps of T4 treating an AI stock, machining the T4-treated stock into the shape of the product (called "workpiece" after this step), for example machining the treated stock into a spline shaft, heating the workpiece to the T6 treatment temperature, and feeding the resin in powdery form to the surfaces of the workpiece, thereby allowing the resin to coat the workpiece using the heating for T6 treatment dually for the heating for resin coating also, then finishing by trimming off the extra resin coating.
   An advantage of this method is that, as the machining is done on the T4 treated stock, i.e., before it has been hardened by the T6 treatment, the machining is done more readily; the thermal distortion which may arise on T6 treatment can generally be tolerated because it is small owing to the much lower temperature of T6 than that of T4 and may therefore be readily corrected by trimming off the extra thickness of the resin coating.
(3) The feeding of the resin powder to the surfaces of the workpiece under the T6 treatment in the second embodiment may be performed by immersing the heated workpiece into an air-fluidised bed of the resin powder so as to let the resin melt and adhere to the surface of the workpiece.
   This modification allows control of the thickness of resin coating as desired by regulation of the time of immersion.
(4) In the second embodiment, a resin powder having a melting point slightly lower than the T6 temperature may be used.
   In this modification, the melted resin powder has an appropriate viscosity and adheres to the T6-treatment-heated workpiece without dripping away, thereby forming a sound coating under its own surface tension.
(5) If the melting point of the resin powder is far lower than the T6 treatment temperature, the workpiece heated to the T6 treatment temperature in the second embodiment may be cooled, subsequent to the T6 treatment or to the beginning of the T6 treatment, generally air-cooled, fora predetermined period of time. Then, the resin powder is fed to the surfaces of the workpiece when its temperature has become slightly above the resin's melting point.
   By this modification, a resin coating as sound as in the above (4) is formed with a resin of much lower melting point than the T6 temperature.
(6) The grain size of the resin powder used in the second embodiment may be adjusted according to its melting point.
   By adjusting the grain size of the resin powder to the melting temperature (the temperature at which the resin is melted) in such a way as the higher the melting temperature (in relation to the melting point of the resin), the coarser the grain size, the ease of melting the resin is controlled so that as sound a resin coating as in the above (4) is formed on the product surfaces. In other words, the lower the melting point of the resin in relation to the temperature at which it is melted, the coarser the grain size.

The invention will now be described, by way of example only, with reference to the accompanying drawings, of which:
Figure 1 is a process flow chart illustrating an embodiment of this invention;
Figure 2 is a diagram illustrating the heat treatment of an embodiment of this invention as a function of temperature and time;
Figure 3 is a flow chart of a conventional method;
Figure 4 is a diagram showing the procedure of heat treatment in a conventional method;
Figure 5 is a diagram illustrating the differences in strength obtained by a method of this invention and by a conventional method; and
Figure 6 shows the chemical composition of the AI stock used in the tests.

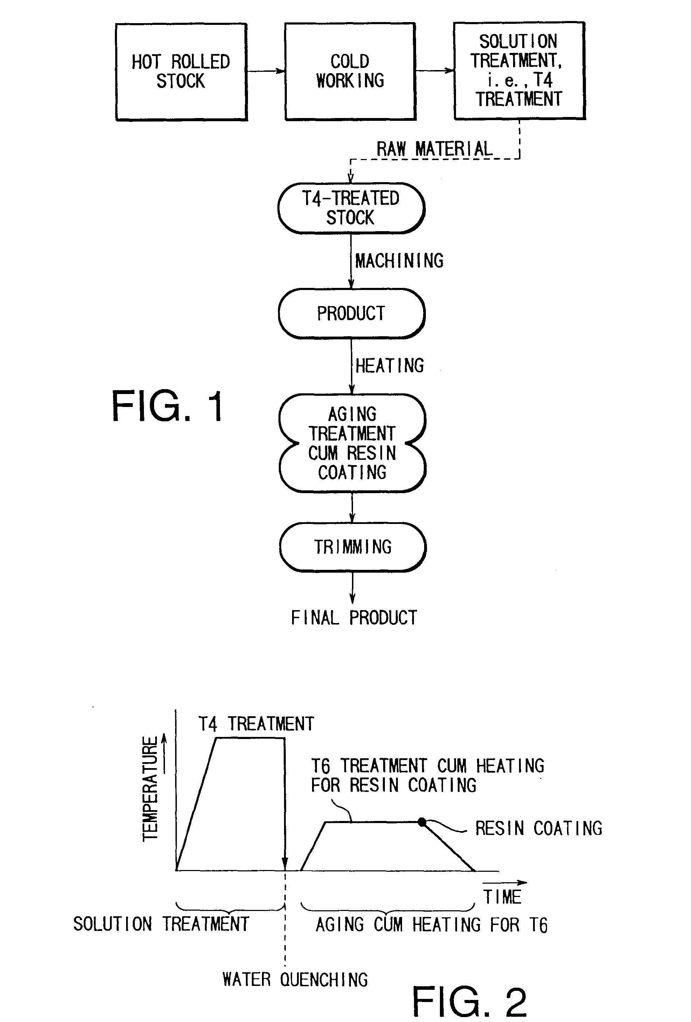

Figures 1 and 2 show schematically the process of manufacturing a propeller shaft from Al. As seen in the drawings, the raw material is a hot rolled AI stock, which is cold worked into a rod and is subjected to solution treatment, i.e., the T4 treatment. Here, the T4 treatment denotes a heat treatment that comprises heating an AI stock to its solution temperature, which is, for example, usually 515 to 550°C, for an appropriate length of time, then quenching (usually cooling with water) therefrom. By this treatment, the state of supersaturation in solute atoms and vacancies is brought down to room temperature, thereby obtaining a T4-treated workpiece.

The T4-treated workpiece thus prepared is machined, mainly with regard to the outerform, into the product spline shaft. It is then subjected to ageing, i.e., the T6 treatment. Here, the T6 treatment comprises reheating the workpiece to an ageing temperature, which is, for example, usually 120 to 200°C, for an appropriate length of time so that certain alloy components and phases are allowed to precipitate out of the supersaturated solid solution, thereby hardening the T4-treated Al.

Then, just before this T6 treatment is completed, the resin is fed in powdery form (for example nylon powder) to the surfaces of the hot workpiece so as to coat the spline shaft. A T6 temperature of, for example, 120 to 200°C is usually sufficient for melting the resin powder and letting the resin adhere onto the surfaces.

Finally, only the extra thickness of the resin coating is trimmed off by grinding or like processing to finish the workpiece as a commercial product.

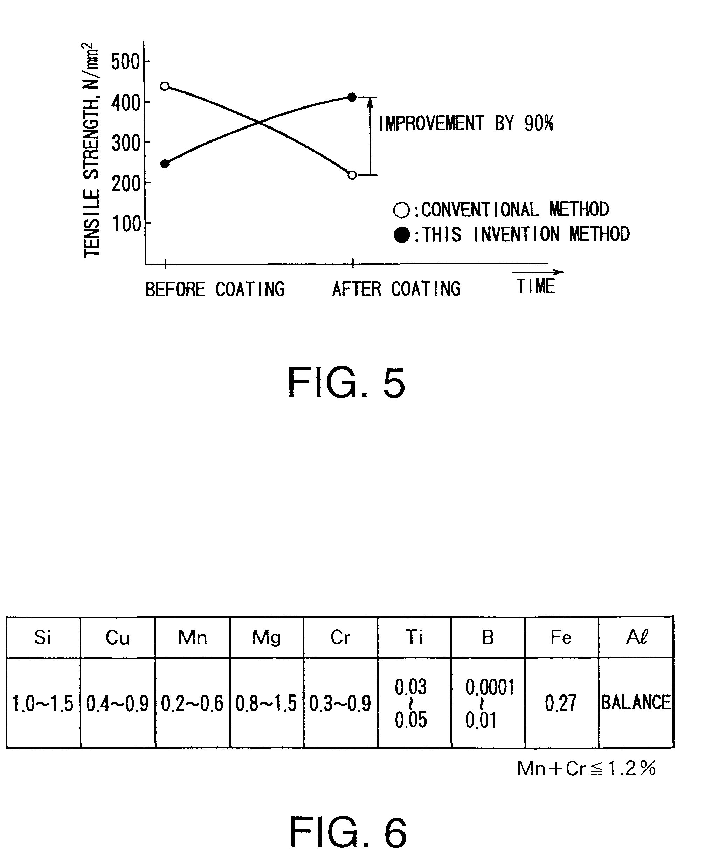

In developing this invention, we have used an AI alloy shown in Figure 6. This AI alloy will have high strength as it is heat treated through a T4 treatment in a temperature range of, for example, 515 to 550°C, advantageously in the range of from 520 to 540°C, followed by a T6 treatment to be conducted in a temperature range of, for example, 160 to 200°C, advantageously in the range of from 160 to 180°C.

Beside the alloy shown in Figure 6, we have found many other AI alloys that fit to the purposes of and are suited for the principles of this invention: for example, the AI-Zn-Mg type high strength alloys (AA 7075), the AI-Mg-Si type corrosion resisting alloys (AA 6061 and 6069), and heat resistant aluminium alloys (AA 2018 to 4032). This observation should be taken as indicating that our invention method is not limited totheAI of Figure 6.

We made a 65 mm diameter rod by cold extruding a hot rolled stock, T4-treated the rod, then machined the T4-treated stock into the designed shape of the product spline shaft. It will be appreciated that because the stock was T4 treated, i.e., not yet age-hardened by the T6 treatment, the machining, such as cutting and milling, was done more easily than if the milling were performed after the T6 treatment.

Subsequently, we have performed the T6 treatment on the workpiece, now in the form of the product spline shaft, by heating it to a temperature in the range of from 160 to 180°C. Through this process, we have been able to attain the desired high strength by letting Si, Mg, etc. finely precipitate out in dispersion. Just before this ageing treatment was completed, we fed resin powder to the surfaces of the workpiece, and let the workpiece cool naturally in air while forming a resin coating on it. In this case, we have selected nylon 11 as a material to form the lubricating and protecting coating for the splines'sliding faces because of its superior mechanical properties, such as, for example, wear resistance and hardness.

Here, we have utilised a fluidised bed of the resin powder, which is formed by suspending the particles in high pressure air. We immerse into this bed the workpiece as heated for T6 treatment so as to let the resin particles melt on its surfaces, to form a continuous film of coating on the surfaces. By adjusting the immersion time or by adjusting the particle density by changing the air pressure, we have been able to control the coating thickness as desired. In this embodiment, we have controlled the thickness to be about 0.5 mm, i.e., far beyond the required design thickness, as will be explained below.

We have also found that the application of static electricity between the resin powder bed and the AI workpiece is helpful to enhance adhesion.

Now the nylon 11 we have used in this case has a melting point of about 170°C. Therefore, when its particles come to touch the hot workpiece of 160 to 180°C, they melt with a viscosity high enough to prevent the melted resin from dripping away under the pull of gravity, yet low enough to form a smooth and sound film coating under its own surface tension (the smooth and sound film coating is formed due to the surface tension).

However, if the resin's melting point is far lower than the T6 temperature (160 to 180°C), say, only 140°C, the melted resin flows off the workpiece surface as a liquid film, so that formation of a sound coating is impossible. In such a case as this, we cool the workpiece in air for an appropriate period of time, and feed the resin powder when the temperature of the workpiece has dropped to slightly higher than the resin's melting point (in our case, 140°C), say, 145°C. Or else, we can use a powder of slightly larger grain size than usual, so that the resin particles will not melt so easily on contacting the workpiece. That is to say, we adjust the heat capacity of the resin particle according to its melting point in relation to the temperature at which it is melted: coarse when the melting point is low and fine when it is high, so that a much the same rate of melting will result.

After having formed a resin coating about 0.5 mm thick on the surfaces of the spline shaft in this way, we have trimmed off about one half of its thickness by grinding, leaving a 0.25 mm film as the final coating. Here, it will be understood that even though thermal distortion can arise at the spline meshing part as the workpiece, which had been machined after the T4 treatment, is reheated for the T6 treatment, we have found the distortion to be less than 0.25 mm because the T6 temperature is a relatively low temperature (we used only 160 to 180°C). It will be appreciated, moreover, that such a distortion is entirely tolerated because it can be eliminated on trimming off the extra thickness of the resin coating (a 0.25 mm trimming is performed, as mentioned above).

Thus, owing to the dual use of the heating for T6 ageing treatment as well as for the heating for resin coating, our method dispenses with the reheating of the workpiece for resin coating, which is required in the convent ional method, thereby avoiding degradation of the strength or loss of the effects of the T6 treatment which may occur during reheating.

This is shown in Figure 5. As seen in the diagram, when the resin coating is done by reheating the T6- treated workpiece, the strength, which was as high as 441 N/mm² before reheating, has decreased greatly to 216 N/mm². In contrast, when the T4-treated workpiece is subjected to the dual treatment of T6 and resin coating, the strength, which was 245 N/mm² on T4 treatment, has been raised to 410 N/mm² with the resin coated on. This is a 90% increase as compared with the conventional method.

It is clear, therefore, that our invention method makes it possible to coat the spline portion of the propeller shaft made ofAl with any chosen resin, nylon 11 for example, thereby successfully manufacturing an aluminium propeller shaft having the inner spline structure, i.e., an automotive part which has been considered difficult to produce by conventional methods. Since our method dispenses with the process of reheating the workpiece for resin coating, it provides considerable saving in man-power and improves productivity.

## Claims

1. A method of coating resin to a workpiece made substantially of aluminium or aluminium alloy during the course of its heat treatment including a T4 treatment followed by a T6 treatment, characterised by a dual use of the heating of the T4-treated workpiece for the T6 treatment also for the heating for coating the resin by feeding the resin in a powdery form to at least one surface of the T4-treated workpiece during the T6 treatment.

2. A method of coating resin to a workpiece made substantially of aluminium or aluminium alloy during the course of its heat treatment including a T4 treatment followed by a T6 treatment, characterised in that the method comprises the steps of:
T4-treating the aluminium workpiece;
machining the T4-treated workpiece into the shape of a product;
heating the workpiece, now of the shape of the product, for the T6 treatment, and, concurrently therewith, coating the workpiece with the resin by feeding the resin in a powdery form to at least one surface of the workpiece under the T6 treatment, thereby dually using the heating for the T6 treatment also as the heating for the resin coating; and
finishing by trimming off the extra thickness of the resin coating.

3. A method as claimed in claim 1 or claim 2, characterised in that the feeding of the resin powder to at least one surface of the workpiece under the T6 treatment is done by immersing the heated workpiece into a fluidised bed of the resin powder so that the resin melts and adheres to at least one surface of the workpiece.

4. A method as claimed in any of claims 1 to 3, wherein the resin powder has a melting point lower than the T6 temperature, the viscosity of the resin at the T6 temperature being such that the resin adheres to the workpiece without dripping away.

5. A method as claimed in any one of claims 1 to 4, wherein the resin powder has a melting point lower than the T6 temperature and wherein the workpiece is allowed, after it is heated to the T6 treatment temperature, to cool in air, and the resin powder is fed to at least one surface of the workpiece when the temperature of the workpiece has become slightly above the melting point of the resin.

6. A method as claimed in any one of claims 1 to 5, wherein the grain size of the resin powder is adjusted according to its melting point, the grain size being the coarser, the lower the melting point.

7. A method of coating resin on a heat treatable aluminium or aluminium alloy substrate during a heat treatment which comprises solution treating, quenching and artificially ageing the substrate, wherein, during the ageing of the substrate, the resin is fed to at least one surface thereof.

8. Amethod of coating resin on a workpiece comprising heattreatable aluminium or aluminium alloy material, the method comprising the steps of: solution heat treating and quenching the material; machining the solution heat treated material; heating the machined workpiece and applying a resin coating to the workpiece by feeding a resin powder to at least one surface of the heated workpiece, such that the heating for the ageing treatment also melts the resin powder; and trimming any excess resin coating from the workpiece.

9. A coated substrate or workpiece when made by a method according to any of claims 1 to 8.
